# EUROPEAN PATENT SPECIFICATION

(11) **EP 3 199 038 B1**
(45) Date of publication and mention of the grant of the patent: **23.01.2019**
(21) Application number: 17153530.5
(22) Date of filing: 27.01.2017
(51) Int. Cl.: A23P 20/10, A23L 7/157

(54) **COATED CRUMB PARTICLE FOR COATING FOOD PRODUCTS**
ÜBERZOGENER BRÖSEL FÜR DAS PANIEREN VON LEBENSMITTELPRODUKTEN
PARTICULE DE MIETTE ENROBEE POUR L´ENROBAGE DE PRODUITS ALIMENTAIRES

(30) Priority: 28.01.2016 NL 2016173
(43) Date of publication of application: 02.08.2017
(73) Proprietor: Koopmans Koninklijke Meelfabrieken B.V., 8937 AA Leeuwarden (NL)
(72) Inventor: KRIJGSHELD, Jan, 8937 AA Leeuwarden (NL); KAH, Judith, 8937 AA Leeuwarden (NL); GROENEVELD, Hein Pieter, 8937 AA Leeuwarden (NL)
(74) Representative: Algemeen Octrooi- en Merkenbureau B.V.

(56) References cited:
- WO-A1-94/13160
- DE-A1- 10 055 317
- GB-A- 2 283 656
- N C SHILTON ET AL: "Fluidization and Its Applications to Food Processing Recommended Citation", FOOD STRUCTURE, vol. 12, no. 2, 1993, pages 199-215, XP55374081,

## Description

### Background

Snack products are often consumed. Many of such snack products consist of a filling that is coated with a layer of breadcrumb or crumb layer. Such snack products are used both at catering facilities (e.g. snack bars, cafés, sports canteens) and at consumers' homes. The snack products are usually stored deep-frozen for sale after production. They are baked/prepared for consumption by means of deep-frying. A way of improving health is by consuming less fat and oil. Thus there is a demand for snack products that can be baked in ways other than deep-frying. There are snack products on the market that can be baked in an oven or microwave oven, for example, or that can be grilled, but consumers often do not find them tasty or crispy. WO 94/13160 A discloses a composition for a coating comprising a film-forming composition selected from various celluloses, various gums, carrageenan, arabinogalactan, alginates and zein.

US 5266340 A discloses a cold temperature setting batter that forms a matrix of protein and starch that prevents the migration of water.

### Summary

The invention relates to a coated crumb particle comprising a crumb particle which is at least 80% covered with a coating layer, said coating layer comprising a fat composition. A plurality of crumb particles constitute a crumb that can be used to coat food products with a crumb coating.

### Brief description of the figures

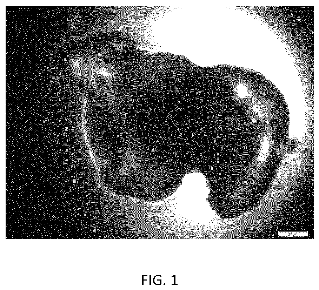

Fig. 1 is a photo of a coated crumb particle.

### Definitions

The following definitions are used in the present description.
• the term " crumb" as used herein means: a plurality of crumb particles;
• the term "crumb coating" as used herein means: a coating of crumbs on an edible substrate for preparing a food product;
• the term "coated crumb particle" as used herein means: a crumb particle having a coating layer or a covering layer on at least part of its outer surface;
• the term "coating layer" as used herein means: a layer of a fat composition that surrounds at least part of the outer surface of crumb particles;
• the term "coverage" as used herein means: the amount of the outer surface of a crumb particle that is covered with a coating layer, expressed as a percentage (%), wherein the average coverage can be measured by determining the percentage of 5 grams of crumb particles that sediments in an amount of water of 100 ml at 12°C during a period of time of at most 600 seconds.

| Coverage (%) | Sediment (%) | Time (s) |
|---|---|---|
| 0 | 100 | 50 |
| 75 | 10 | 600 |
| 80 | 4.9 | 600 |
| 85 | 1.4 | 600 |
| 90 | 0.9 | 600 |
| 95 | 0.4 | 600 |
| 97 | 0.2 | 600 |
| 99 | 0.1 | 600 |

• the term "powder coating" as used herein means: a layer of powder (dust) or (fine) crumb particles that is applied to the filling/the substrate with or without a preceding batter coating;
• the term "batter coating" as used herein means: a layer made of liquid batter applied to the filling/the substrate with our without a preceding powder coating;
• the term "filling" as used herein means: a (soft) filling that may be a mixture of several components such as a ragout for croquettes;
• the term "substrate" as used herein means: a (solid) piece of food or food product, such as a piece of chicken (product), fish (product) or meat (product) or a vegetarian product;
• the term "fat" as used herein means: solid fats (melting point above 20°C) and also liquid fats (i.e. oils), and lipids, viz. triglycerides, diglycerides, polyol polyesters and polycarboxylic acid esters, triesters of glycerol and fatty acids, unless specifically otherwise indicated. It is generally assumed that fats/oils are fatty acid triglycerides that occur either naturally in animal and vegetable materials or also in adapted, randomized and interesterified fats/oils.
• the term "solid fat" as used herein means: a fat as explained above, having a melting point above 20°C (the melting point of a fat being understood to mean that the fat has an SFC or Solid Fat Content of at least 60% at 20°C). In a preferred example this means a fat having an SFC (solid fat content) profile in which, at a given temperature, at least a specific percentage of the fat, based on the total weight of the fat, is solid, for example the following profile: 80% at 10 °C, 70% at 15 °C, 60% at 20 °C, 45% at 25 °C, 40% at 30 °C, 35% at 35 °C, 25% at 40 °C, 20% at 45 °C, 10% at 50 °C, 0% at 55 °C.
• the term "fatty acid" as used herein means: an organic carboxylic acid having a chain of at least two carbon atoms and one carboxyl group (COOH).
• the term "producing without deep-frying" as used herein means: the food product is produced for sale or for storage or for cooking without use being made of deep-frying in the production process;
• the term "preparing without deep-frying" as used herein means: the food product is prepared for consumption (baked) without deep-frying;
• the term "deep-frying" as used herein means: frying through immersion in oil or fat;
• the term "particle size of 300 and 1600 micron" as used herein means: a plurality of particles which, when tested according to a sieving method in which 100 grams of particles is successively shaken on progressively finer mesh sieves and the percentage of particles falling through is calculated in a cumulative way: 1600 micron mesh size (1.6 millimetres): at least 98% of the particles fall through this, so in total 98% of the particles are smaller than 1600 micron and 2% of the particles are larger than 1600 micron; 1400 micron mesh size (1.4 millimetres): at least 94% of the remaining 98% particles fall through this, so in total 92% of the particles are smaller than 1400 micron and 8% of the particles are larger than 1400 micron; 1000 micron mesh size (1.0 millimetre): at least 60% of the remaining 92% of the particles fall through this, so in total 55% of the particles are smaller than 1000 micron and 45% of the particles are larger than 1000 micron; 300 micron mesh size (0.3 millimetres): at least 4% of the remaining 55% of the particles fall through this, so in total 2% of the particles are smaller than 300 micron and 98% are larger than 300 micron;
• the term "particle size of 150 and 2500 micron" as used herein means: a plurality of particles which, when tested according to a sieving method in which 100 grams of particles is successively shaken on progressively finer mesh sieves and the percentage of particles falling through is calculated in a cumulative way: 2500 micron mesh size (2.5 millimetres): at least 90% of the particles fall through this, so in total 90% of the particles are smaller than 2500 micron and 10% of the particles are larger than 2500 micron; 2000 micron mesh size (2.0 millimetres): at least 80% of the remaining 90% of the particles fall through this, so in total 72% of the particles are smaller than 2000 micron and 28% of the particles are larger than 2000 micron; 1600 micron mesh size (1.6 millimetres): at least 50% of the remaining 72% of the particles fall through this, so in total 36% of the particles are smaller than 1600 micron and 64% of the particles are larger than 1600 micron; 1000 micron mesh size (1.0 millimetre): at least 1% of the remaining 36% of the particles fall through this, so in total 0.4% of the particles are smaller than 1000 micron and 99.6% of the particles are larger than 1000 micron;
• the term "particle size of 300 and 3500 micron" as used herein means: a plurality of particles which, when tested according to a sieving method in which the particles are successively shaken on progressively finer mesh sieves and the percentage of particles falling through is calculated in a cumulative way: 3500 micron mesh size (3.5 millimetres): at least 100% of the remaining particles fall through this, so in total 100% of the particles are smaller than 3500 micron; 1400 micron mesh size (1.4 millimetres): at least 24% of the particles fall through this, so in total 24% of the particles are smaller than 1400 micron and 76% of the particles are larger than 1400 micron; 1000 micron mesh size (1.0 millimetre): at least 33% of the remaining 24% of the particles fall through this, so in total 16% of the particles are smaller than 1000 micron and 84% of the particles are larger than 1000 micron; 300 micron mesh size (0.3 millimetres): at least 6% of the remaining 16% of the particles fall through this, so in total 1% of the particles are smaller than 300 micron and 99% of the particles are larger than 300 micron.

### Detailed description of the invention

A coated crumb particle comprising a crumb particle which is at least 80% covered with a coating layer, the coating layer comprising a fat composition, can be used in a crumb coating for a food product such as a snack. After baking in the oven, a crumb coating of such crumb particles produces a tasty product with a crispy crust even without any use of deep-frying. When deep-frying is used, a crispy crust is produced. The coating of preferably solid fat surrounding the crumb particles according to this aspect ensures that a crispy crust is obtained also without deep-frying. During storage, the coating of preferably solid fat provides a protective coating around the crumb particles to protect them from moisture that is attracted to the crumb particles from the surrounding area or from the filling. The covering layer prevents the absorption of water during storage in a refrigerator or deepfreeze. Crumb particles are usually porous and hydrophilic, absorbing moisture from the surrounding area. This is prevented by the fat coating according to this aspect. The coating of preferably solid fat gives the snack product a crispy taste after cooking. The application of a cover layer to the crumb particles improves their crispiness. The taste, bite and look of the food product cooked without deep-frying are more like those of food products that are cooked by deep-frying.

If the food product is cooked/baked in a (microwave) oven instead of by deep-frying, the amount of oil/fat that is consumed can be substantially reduced, for example by 10%. Cooking food by deep-frying can also lead to the presence of harmful acrylamide in the food, which can be significantly reduced by cooking in an oven.

If the food product is cooked in a (microwave) oven instead of by deep-frying, larger volumes can be cooked, for example at sports events or at food business operators. If the food product is cooked in a (microwave) oven instead of by deep-frying, no permit is required for deep-frying in a commercial environment.

In the process of deep-frying, a food product is given a certain firmness and crispiness by immersing it in oil. When a product is cooked in a (microwave) oven the product and its crumb coating are only heated, so the firmness and crispiness must be obtained via the components of the crumb coating, in this case the coating of preferably solid fat.

The food product according to one aspect may comprise one or more of the following elements, viewed from the inside to the outside:
- filling/substrate
- batter coating (optional)
- powder coating (optional)(the last two coatings may be repeated)
- batter coating
- crumb coating
- batter coating (optional)
- crumb coating (optional) (the last two coatings may be repeated)

The various elements will be separately elucidated below.

### Filling/substrate

The food product/snack product comprises a substrate or a filling.

In one aspect, the substrate or the filling may be of animal origin, for example meat or fish or poultry, such as chicken, lamb, beef, pork, veal or fish, possibly in combination with a dough or a starch filling (e.g. ragout). Examples of this are a chicken nugget, a fish stick, a bitterbal or a croquette.

In one aspect, the substrate or the filling may comprise a dairy product (e.g. yoghurt or cheese), possibly in combination with a dough or a starch filling (e.g. ragout). Examples of this are a cheese croquette or cheese soufflé.

In one aspect, the substrate or the filling may be of plant origin (such as vegetable or fruit), possibly in combination with a dough or a starch filling (e.g. ragout). Examples of this include a vegetable croquette.
In one aspect, the substrate or the filling may be a combination of the above, possibly in combination with a spice or a sauce, such as fish with sauce.

In one embodiment, the food product to be prepared is a croquette (for example a meet croquette, a potato croquette, a cheese croquette, a fish croquette et cetera), a cheese soufflé (consisting of a dough envelope and a soft or liquid cheese filling), a nugget (for example a chicken nugget, a fish stick, a meat nugget with a chicken, fish or meat substrate, respectively), a snack (for example a block-shape or disc-shaped snack with a filling of noodles (in Dutch "bamischijf") or fried rice (in Dutch "nasischijf")).

In one embodiment, the substrate has the shape of a hamburger, a nugget, a bar, a cylinder or a ring.

In one embodiment, the filling / substrate comprises between 75 and 85% of the total weight of the food products.

### Batter coating

In one aspect, the food product is provided with a batter coating, after which the crumb coating is coated onto the batter coating. The batter provides sufficient adhesion of the crumb coating to the filling/the substrate; the crumb coating is held on the filling / substrate and will not break or fall off. The batter coating is a liquid coating, onto which the crumb coating is coated.

In one embodiment, the batter consists of a solid component and a liquid component. In one embodiment, the solid component comprises a protein and a thickening agent, possibly a flavouring and possibly a starch-containing material. In one embodiment, the liquid component comprises water and possibly oil and optionally protein.

In one embodiment, the starch-containing material of the batter comprises one or more of a meal or flour or a starch. Examples of the meal are wheat meal, maize meal, rice meal or soy flour. Examples of the starch are wheat starch, potato starch (for example amylopectin starch), rice starch, maize starch (for example high-amylose-content maize starch with an amylose content of at least 70 wt.%). In one aspect, a combination of wheat meal and maize meal is used in the batter.

In one embodiment, the protein in the batter is selected from animal protein, such as egg protein (for example chicken egg protein in liquid or dried powder form; also called egg albumin, which may be of the so-called high-gel type, for example), dairy protein, such as milk protein (for example whey protein or whey protein concentrate; also known as WPC or Whey Protein Concentrate, containing for example 80% protein on a dry matter basis) or vegetable protein, such as rice protein, for example so-called "instantized and agglomerated" rice protein powder containing 80% protein on a dry matter basis, or maize protein powder.

In one embodiment, the batter comprises water, protein, guar gum and xanthan gum, salt and whey protein.

In one embodiment, the batter comprises a flavouring or aroma such as salt and/or herbs or spices.
In one embodiment, the thickening agent is selected from the group consisting of a gelatine, a cellulose (for example HPMC), or a polysaccharide such as a galactomannan (for example guar gum, carob bean gum) or xanthan gum.

In one embodiment, a thickening agent is used, so that a 1% solution of the thickening agent in water will have a viscosity of between 4800-5800 mPa.s, measured by Brookfield RVF, spindle No. 4 with a speed of 20 revolutions per minute, for 2 hours at a temperature of about 25 °C.

In one embodiment, the batter is made by mixing the dry components with the one or more liquid components.

In one embodiment, the batter has a viscosity of 12-15 sec measured according to Simax 6 din as described in the examples.

In one aspect, the batter may contain nutrient fibres. Examples of this are wheat fibres and oat fibres or a combination thereof. The presence of nutrient fibres in the batter may lead to fibre enrichment, which is a nutritional improvement. It may also lead to fat reduction, reduction of the caloric value, improvement of the texture and increased moisture migration control.

In one aspect, the batter may contain an adhesion-enhancing agent; it imparts film-forming and stabilizing properties to the batter, so that the batter will form a uniform film on the filling/the substrate. Examples of this adhesion-enhancing agent are dextrin, such as potato dextrin (for example so-called "high-viscos dextrin"), or tapioca starch or maize starch.

In one aspect, the batter may contain an emulsifying agent. The use of an emulsifying agent in the batter may lead to an enhanced crispiness of the final food product. Examples of emulsifying agents are a combination of mono-glycerides and diglycerides of fatty acids, such as E471 or soy lecithin.

In one embodiment, the batter may further comprise a preservation agent, a colourant, a nutrient, a stabilising agent, an agent that adds texture, a pH-controlling agent, an acidifying agent, a raising agent, an anticaking agent, a moisturising agent, a reinforcing dough and a conditioning dough, or a sweetener or one or more combinations thereof.

Examples of sweeteners are maltodextrin, dried glucose syrup and sorbitol. Examples of the oil that may be present in the batter as the liquid component are sunflower oil, rice bran oil, rape seed oil, olive oil, peanut oil and one or more combinations thereof.

The batter can be applied by immersing the substrate/the filling in the batter to form a batter coating. After the application of the crumb coating or the powder coating, the batter coating can be dried or hardened (for example by heating). This makes the batter coating strong and better suited for storage. This hardening of the batter coating can take place in a special oven using dry air and a high air speed of 750 to 1250 m/s (for example 1000 m/s), with a dew point of 40 °C and a temperature of, for example, 220 °C, for a baking period of 1 to 15 minutes (for example 5 minutes). Following that, an additional batter coating and crumb coating may be applied.

In one embodiment, the batter coating has a thickness of between 0.05 and 1.0 mm, preferably 0.1 to 0.3 mm, for example 0.2 mm, prior to the application of a crumb coating and prior to the possible hardening. If more than one batter coating is applied, each batter coating may have such a thickness.

In one embodiment, the batter comprises between 2 and 20%, preferably between 4 and 15% of the total weight of the food product.

In one embodiment, application of a batter coating and crumb coating takes place three times (i.e. powder coating, batter coating, crumb coating, batter coating, crumb coating, batter coating, crumb coating; without intermediate hardening). In one embodiment, a batter coating and crumb coating are applied four times (i.e. powder coating, batter coating, crumb coating, batter coating, crumb coating, batter coating, crumb coating, batter coating crumb coating; without intermediate hardening) in one embodiment, a batter coating and crumb coating are applied five times (i.e. powder coating, batter coating, crumb coating, batter coating, crumb coating, batter coating, crumb coating, batter coating, crumb coating, batter coating, crumb coating; without intermediate hardening).

### Powder coating

The powder coating is also called dust or dust coating. This powder coating provides adhesion of the batter coating to the filling/the substrate. This powder coating is optional and can be applied directly around the filling. The powder coating can also be applied after a first batter coating has first been applied. In one aspect, a (second) batter coating is applied after the application of the powder coating.

In one embodiment, the powder coating consists of ground crumb particles according to the present invention, which have been reduced to an average particle size of at most between 300 and 1600 micron or at most between 150 and 2500 micron; the sieving curves of these particle size distributions are shown in the Examples.

In one embodiment, the powder coating has a thickness of between 1.0 and 2.0 mm, preferably between 1.2 and 1.5 mm. In one embodiment, the powder coating comprises between 4 and 25% of the total weight of the food product, preferably between 9 and 18%.

### Crumb coating

In one embodiment, the crumb particles are breadcrumb particles. In one embodiment, the crumb particles are obtained by baking a dough and crumbing the baked dough.

In one aspect, the dough used for the preparation of crumb particles comprises a starch-containing material, a raising agent, a flavouring and a colourant.

In one embodiment, the starch-containing material has been selected from the group consisting of a meal or a starch or a combination thereof.

In one embodiment, the meal has been selected from the group consisting of wheat meal, maize meal, rice meal or soy meal.

In one embodiment, the starch has been selected from the group consisting of wheat starch, potato starch, rice starch, maize starch, soy starch and one or more combinations thereof.

In one embodiment, the starch-containing material is a combination of wheat meal and wheat starch.

In one embodiment, a powder coating is applied after the application of a first crumb coating. A second crumb coating is applied after the application of the powder coating. In one embodiment, a powder coating is applied and subsequently a first batter coating is applied followed by a first crumb coating; following that, a second batter coating and a second crumb coating are applied. By applying the powder coating, a stronger adhesion of the crumb coating(s) to the filling is obtained, which will be important in particular if two or even more crumb coatings are applied.

In one embodiment, the coating of the coated crumb particle consists of a fat composition, which fat composition comprises at least 80 wt.%, or at least 90 wt.%, in another aspect at least 99 wt.% or even 100 wt.% solid fat, based on the total weight of the fat composition. In one embodiment, the fat composition is pure, solid fat or a mixture of pure, solid fats.

In one embodiment, the coating layer comprises at least 80 wt.%, at least 90 wt.%, at least 99 wt.% or even 100 wt.% solid fat, based on the total weight of the coating layer. In one embodiment, the coating layer is pure, solid fat or a mixture of pure solid fats.

In one embodiment, the crumb particle coating has a thickness of 0.1 to 0.3 mm. It will be understood that the shape of these particles may be irregular, for example if bread particles are used as the crumb particles. As a result, the thickness of the coating may not be uniform over the surface of the crumb particles. In other words, the thickness of the coating layer may vary over the surface of the crumb particles. The phrase "a coating with a thickness of 0.1 to 0.3 mm" is understood to mean that the thickness of the coating ranges between 0.1 and 0.3 mm over at least 80%, or at least 90%, or at least 95%, for example at least 99% of the surface. The thickness of the coating layer can be determined, for example, by making use of a thickness gauge as commonly used for determining the layer thickness of paint and varnish (for example according to ISO 2808 (2007)). Without wishing to be bound to a theory, according to the inventor, the thickness gauge operates on the basis of ultrasound pulses. A non-limitative example of an apparatus that can be used for this purpose is the QuintSonic 7 from Elektrophysik.

The coating layer covers at least 80%, or at least 90%, or at least 95%, for example at least 99%, of the surface of the crumb particle. Figure 1 shows a photo of a coated crumb particle, from the round contours of which it can be seen that it is largely covered with a coating layer.

In one embodiment, the fat is a vegetable fat or a combination of one or more vegetable fats. In one embodiment, the fat is a vegetable fat containing an amount of at least 95 wt.% long fatty acids (C12-C18), based on the total weight of the vegetable fat.

In one embodiment, the vegetable fat comprises less than 5 wt.%, preferably less than 3 wt.%, in particular less than 2 wt.% fatty acids having a carbon chain length of C14 or less, based on the total weight of the vegetable fat.

In one embodiment, the vegetable fat comprises less than 3 wt.%, preferably less than 2 wt.%, in particular less than 1 wt.% fatty acids having a carbon chain length of C20 or more, based on the total weight of the vegetable fat.

In one embodiment, the vegetable fat comprises at least 92 wt.%, in particular at least 95 wt.%, more in particular at least 98 wt.%, fatty acids having a carbon chain length of C16 or C18, based on the total weight of the vegetable fat.

In one embodiment, the fat has been selected from the group consisting of palm oil, coconut oil, Shea oil, colza oil, rape seed oil (for example hydrogenated), sunflower oil (for example hydrogenated such as double hardened), and one or more combinations thereof. If a vegetable oil having a melting point of less than 25 °C is used, it is preferable to use a hydrogenated (or double-hardened) oil.

In one embodiment, the fat has a melting point of at least 20 °C, preferably between 25 °C and 100 °C, preferably between 35 °C and 80 °C, in particular between 25 °C and 65 °C.

In one embodiment, the crumb particle comprises 5-30% fat, for example 5-25%, such as 10-20% fat, for example 12-17% fat, such as 15% fat, based on the total weight of the crumb particle.

A part of the appearance of snack products with a crumb coating is the colour after baking. It is important that the snack is aesthetically attractive after heating/baking. After deep-frying, the snack can have various colours, which are measured by means of a colour scale. Examples of colours that are often perceived in baked crumb-coated food products are brown, gold and orange. This colour is given in part by the colour of the crumb coating that is used and in part by the deep-frying process. To obtain a similar colour without deep-frying, one or more colourants may be added to the crumb. In one embodiment, a colourant is used. This colourant may be added to the dough used for making the crumb. This colourant makes the final product look better. Snack products prepared by deep-frying often obtain a nice golden yellow, brown or red-brown colour. If snack products are prepared in the oven, however, the colour is often less attractive and consumers find the product to be less tasty. In some cases the final product may become dull after being deep-frozen, this can be prevented by using a colourant. Colourants that may be used are, for example, caramel (powder), burnt sugar, paprika, curcuma, malt flour, and one or more combinations thereof. By varying the amounts and combinations, it is possible to obtain the desired colour resembling the colour of deep-fried snacks.

In one embodiment, the colourant added to the dough is selected from the group consisting of: paprika (powder or oleoresin), curcuma (powder or oleoresin), caramel (powder), annatto (powder or oleoresin), malt flour, burnt sugar. A number of these colourants also give the product a specific taste and can therefore also be considered to be flavourings.

In one embodiment, the crumb particles have a particle size distribution with an average particle size of 300-1600, a particle size distribution of 300-3500 or a particle size distribution of 150-2500. In one embodiment, the average particle size of said crumb particle ranges between 300 and 1600 (see definitions).

In one embodiment, the crumb coating comprises between 10 and 45% of the total weight of the food product, for example between 20 and 35%, depending on the size of the substrate/filling, among other things.

It is possible to use a mixed crumb coating, viz a combination of two or more crumb particles. In one embodiment, the crumb coating comprises a mixture of a plurality of first coated crumb particles and a plurality of second coated crumb particles, wherein the first and second coated crumb particles are different from each other as regards the material of the crumb particles and/or the coating layer.

### Food product

The food product according to one aspect of this description is a snack or part of a menu.

In one embodiment, the food product comprises a filling / substrate, a powder coating, a batter coating and a crumb coating. In one embodiment, the food product comprises a filling /substrate, a first batter coating, a powder coating, a second batter coating and a crumb coating. In one embodiment, the food products comprises a filling / substrate, a batter coating and a crumb coating.

### Method for producing coated crumb particles

In one aspect, the invention relates to a method for preparing a coated crumb particle, the method comprising i) providing a plurality of crumb particles, ii) fluidising the particles in an air flow, iii) spraying a liquid fat composition having a temperature of at least 65 °C onto the fluidised particles so as to provide at least part of the outer surface of the particles with a coating layer.

These steps will now be explained in more detail.

### i) providing a plurality of crumb particles

Use may be made of commercially available crumb particles, for example breadcrumb particles. In addition to that, it is also possible to produce crumb particles, as will be explained in more detail hereinafter.

### ii) fluidising the particles in an air flow

In one aspect of the invention, the crumb particles are provided with a fat coating by spraying the fat onto the particles when they are in motion. This makes it possible to provide the individual particles with a coating, so that a better coverage of the particles can be obtained. The particles are set in motion by means of an air flow, using a fluidised bed method, after which spraying takes place.

### iii) spraying a liquid fat composition preferably having a temperature of at least 65 °C onto the fluidised particles

In one embodiment, use is made of a fat which is liquid at the temperature of application to the particle, which fat is sprayed onto the crumb particles. In this way a uniform coating is obtained. In a preferred embodiment, use is made of a fat that becomes liquid at a higher temperature (in other words, a solid fat); in that case the fat needs to be melted by heating before this van be sprayed. The advantage of using a fat which is solid at room temperature is that the coating becomes solid after the coated crumb particles have been produced and the particles can be easily stored before being used as crumb coating. Subsequently, a liquid fat composition is sprayed on the particles that have been set in motion by means of an air flow using a fluidised bed method.

### Method for preparing crumb particles

The crumb particles can be produced by making a dough, baking this dough and crumbling this.

To make a dough, the solid starting materials (such as (wheat) flour or meal, yeast, flavourings and/or colourants) are mixed with water, with sufficient time being given to the hydration of the starting materials while adding the dough moisture, said moisture in part comprising water and in part water in which flavourings and/or colourants are dissolved. The dough is developed by being kneaded to the desired condition.

From this dough, bread rolls/dough pieces are formed, which have a thickness of for example 6 - 10 cm (e.g. 8 cm), a width of 7 to 13 cm (e.g. 10 cm) and a length of 10 to 20 cm (e.g. 14 cm). The dough pieces are allowed to rise at room temperature (21 °C) or at a higher temperature, for example for 5 to 25 minutes, such as 15 minutes. The dough pieces are then baked. In one aspect, it is ensured that a heat transfer takes place such that there will be no crustation. Baking is for example carried out at a temperature of 180 - 240 °C, such as 200, 210 or 220 °C. In one aspect, baking takes place for a period of 30 to 40 minutes. In one aspect, the temperature of the core of the bread rolls/dough piece after baking is at least 90 °C.

In one aspect, the bread rolls are cooled to a core temperature of about 45 °C after baking. The bread rolls/dough pieces are then ground and dried, for example in a fluidised bed drying device, for example to a moisture content of at most 10%. Subsequently, for example after a period of rest of for example 12 hours, the particles can be further ground to the desired particle size using a roller mill. The desired particle size distribution can be obtained by sieving.

### Food product production method

The food product can be prepared in a usual manner. In one aspect, the steps to be carried out in this production method are for example the following:
- Portioning the substrate/preparing the filling
- Applying a first batter coating
- Applying a powder coating
- Applying a second batter coating
- Applying a crumb coating
- Pre-cooking or pre-baking the product obtained (this is required for some substrates, such as raw meat/fish substrates)
- Deep-freezing the product
- Storing the product at a temperature between -0 and -40 °C, for example between -15 and -20 °C
- Packaging and storing the product

In one embodiment, the method for preparing a food product comprises i) portioning the substrate/preparing the filling, ii) applying a powder coating to the portioned substrate or the prepared filling, iii) applying a batter coating to the product obtained in step ii), and iv) applying a crumb coating to the product obtained in step iii).

In one embodiment, the method for preparing a food product comprises i) portioning the substrate/preparing the filling, ii) applying a first batter coating to the portioned substrate or the prepared filling, iii) applying a powder coating to the product obtained in step ii), iv) applying a second batter coating to the product obtained in step iii), and v) applying a crumb coating to the product obtained in step iv).

Application of the batter coating can be carried out using known methods such as spraying, passage through a batter curtain, immersion and brushing. The substrate/the prepared filling or the coated product may be immersed in the batter, for example. After the application of the batter coating, the product may be allowed to drain so as to remove any excess batter. The batter coating can also be applied by passing the substrate/the filling or the batter-coated products through a device comprising a batter bath, using a conveyor belt.

Application of the powder coating can take place, for example, by passing the coated product through a device comprising a flow of powder, using a conveyor belt. The powder coating can also be applied by passing the substrate/the filling, possibly provided with a batter coating, through a device comprising a treatment chamber containing particulate material.

Application of the crumb coating can take place, for example, by passing the batter-coated product through a device comprising a flow of powder, using a conveyor belt. The crumb coating can also be applied by passing the batter-coated product through a device comprising a treatment chamber containing particular material.

In one embodiment, the method for preparing a food product comprises deep-freezing the obtained product after the application of a crumb coating to the product. Deep-freezing of the food product comprises placing the product in a container in which a lower temperature prevails. This temperature ranges between 0 and -40 °C, for example between -15 and -20 °C. When the food product is placed in the container with the lower temperature, the temperature of the product will be lowered until crystallisation of the water present in the product takes place.

In one embodiment, the method for preparing a food product comprises pre-cooking or pre-baking the obtained product. Said pre-cooking or pre-baking of the food product can be done by deep-frying the product. However, in order to obtain a product produced without deep-frying as well as prepared without deep-frying, the coated food products can be heated in an oven at a temperature between 160 and 270 °C, preferably between 180 and 250 °C, for a period of 1 to 10 minutes, for example 5 minutes. Preferably, the oven has a high air speed of 750 to 1250 m/s (e.g. 1000 m/s), with a dew point of 40 °C.

In one embodiment, the method for preparing a food product comprises deep-freezing the obtained product after said product has been pre-cooked or pre-baked. In one embodiment, the method for preparing a food product comprises storing the product at a temperature of 0 to -40 °C, for example -15 to -20 °C, after the product has been deep-frozen.

In one embodiment, the method for preparing a food product comprises packaging and storing the product.

The various embodiments and aspects will now be explained by means of a number of non-limitative examples.

### Examples

The following examples are intended to explain the invention, not to limit the invention.

Ground breadcrumb, obtained from ground bread that is sieved, was used as the powder for the powder coating. The powder that had the same particle size was used for preparing the crumb coating. This powder was used in all the examples. It will be understood that the skilled person may use other types of powder for the powder coating, for example powder having a small particle size. Such powder types for the powder coating are known to the skilled person and are not limitative.

### Examples 1-7

To test which batter type gives which characteristics, a number of batter types were used for the batter coating, which types are shown in the table below. The same crumb type was used in all the experiments of this series, so that only the batter was variable; this in order to be able to correctly evaluate the effect thereof.

A fine, gold-coloured breadcrumb was used as the crumb in examples 1-7, which crumb was obtained by making, baking and crumbing. A dough was prepared on the basis of wheat flour (95 wt.%), salt (1.5 wt.%), paprika powder (1 wt.%), yeast (1 wt.%), sunflower oil (1 wt.%), curcuma powder (0.5 wt.%), each weight percentage being based on the dry matter of the dough. This was mixed with sufficient water to form a coherent dough. The dough was mixed and kneaded at a temperature of 35 °C, with dough pieces measuring 14x10x7 cm being formed. The dough was allowed to rise at room temperature (21 °C) for 15 minutes. The risen dough pieces were baked at a temperature of 200 °C for 40 minutes, then cooled and coarsely ground using a hammer mill with an 80 mm matrix. Following that, the crumb particles were dried at a temperature of 110 °C to a moisture content of 10 wt.% and subsequently cooled at room temperature for 10 minutes. The particles were then further reduced using a roller mill. The particle size distribution ranged between 300 and 1600 particle size.

Following this, the crumb particles were provided with a palm oil coating layer, with 3 wt.% palm oil (based on the total weight of the coated crumb particles) being applied to the crumb and at least 90% of the surface of at least 80% of the crumb particles being covered with palm oil. This was determined by microscopic examination.

The protein component to be used for the batter of examples 1-7 was selected from chicken egg protein powder (also called egg albumin, of the "high gel" type), a whey protein powder (a whey protein concentrate comprising 80% protein, based on the dry matter content, also called whey protein concentrate 80% or WPC 80%), a rice protein powder (a so-called "instantized & agglomerized" rice protein powder comprising 80% protein, based on the dry matter content) and one or more combinations thereof. For this test, guar gum and xanthan gum or a combination thereof was used as the thickening agent in all cases. Other thickening agents or combinations are also possible, of course. Furthermore, the same amount of salt was used as the flavouring agent in all cases. In this way it was tested which (combination of) protein-containing material is to be preferred in the batter.

**Table 1: solid batter components (total 100 wt.% based on the dry weight of the batter)**

| Batter | Chicken-protein powder | Whey-protein powder | Rice-protein powder | Guar gum | Xanthan gum | Salt |
|---|---|---|---|---|---|---|
| A | 94 | 0 | 0 | 1,5 | 0,5 | 4 |
| B | 0 | 94 | 0 | 1,5 | 0,5 | 4 |
| C | 0 | 0 | 94 | 1,5 | 0,5 | 4 |
| D | 31,3 | 31,3 | 31,3 | 1,5 | 0,5 | 4 |
| E | 62,7 | 31,3 | 0 | 1,5 | 0,5 | 4 |
| F | 62,7 | 31,3 | 0 | 0 | 2 | 4 |
| G | 62,7 | 31,3 | 2 | 2 | 0 | 4 |

These solid components were diluted with water (1 part dry components and 10 parts water) to form a batter. Use was made of a Eurostar mixing device, by means of which, using a rotational speed of 900-1300 revolutions per minute of the screw for 5 minutes, a batter having a viscosity measured according to Simax 6 din was formed. To measure the viscosity, use was made of a DIN cup 6 mm, which was filled to the brim with batter (capacity 100 cc). The batter was mixed in a beaker for 5 minutes in a proportion of 1 part dry matter and 9 parts water having a temperature of about 4 °C. The total amount was 1000 g, and after 5 minutes of rest the liquid was allowed to pass through a 6 mm aperture and, using a stopwatch, the time it took for the cup to empty completely was noted; the recorded time ranged between 12 and 14 seconds for all batter types. Beef ragout in the form of a croquette was used as the filling in all cases; which is known to the skilled person in this field; this filling was rolled through the powder to form a powder coating and then immersed in the batter, excess batter was allowed to drip off from the filling. Subsequently, the filling provided with the batter was rolled through the crumb coating until a complete crumb coating had been formed. The croquette that was formed was visually evaluated for a number of criteria, viz the adhesion of the batter to the filling, the adhesion of the crumb to the batter and the crispiness of the crumb coating after baking in an oven of 200 °C for 10 minutes. The duration of the baking process in the oven of 200 °C depends on the weight of the croquette; with a weight of about 70 g this is 10 minutes, but for a croquette of about 90g it is 15 minutes.

**Table 2:**

| Experiment | Batter | Adhesion batter to filling | Adhesion crumb to batter | Crispiness crumb coating | Coverage (%) |
|---|---|---|---|---|---|
| 1 | A | + | + | - | 90 |
| 2 | B | + | + | - | 90 |
| 3 | C | + | + | - | 90 |
| 4 | D | + | + | o | 93 |
| 5 | E | + | + | + | 98 |
| 6 | F | + | + | o | 93 |
| 7 | G | + | + | - | 91 |

The adhesion of the batter to the filling was visually evaluated for the following criteria: - little adhesion / o reasonable adhesion / + good adhesion.
The adhesion of the crumb to the batter was visually evaluated for the following criteria: - little adhesion / o reasonable adhesion / + good adhesion.
The crispiness of the crumb coating was evaluated for the following criteria: - poor (does not feel crispy) / o moderate (feels moderately crispy) / + good (feels crispy).

From this it can be concluded that in particular batter E gives a good crispiness of the crumb coating.

### Examples 8-27

A number of crumb types were used for the crumb coating, which types are shown below. All these crumb types were tested with batter E so as to show the effect of the particular type of crumb. In these examples, the same powder as used in examples 1-7 was used. A ragout filling in the form of a croquette was again used as the filling, which was passed through a powder so as to apply a powder coating, then through the batter and subsequently a crumb coating; the latter two steps (batter and crumb coating) were repeated a number of times. The croquette that was formed was baked in an oven at 200°C for 10 minutes and subsequently evaluated for a number of criteria. The duration of the baking in the oven at 200 °C depends on the weight of the croquette; for a weight of about 70 g this is 10 minutes, but for a croquette that weighs about 90 g it is 15 minutes.
Crumb I: A fine gold-coloured crumb, based on bread, with a particle size distribution as indicated above. The crumb was prepared in the same manner as in examples 1-7, including the baking and cooling of the dough pieces. The dough pieces were then finely ground using a hammer mill with a matrix of 80 mm. Following that, the crumb particles were dried at a temperature of 110 °C to a moisture content of 10 wt.% and subsequently cooled for 10 minutes at room temperature. The particle size distribution ranged between 300 and 1600. No coating was applied.
Crumb II: A coarse brown-coloured crumb as obtained in examples 1-7 was used, with the exception that the following ingredients were used for the dough: wheat flour (94.7 wt.%), salt (1.5 wt.%), paprika powder (1 wt.%), yeast (1 wt.%), sunflower oil (1 wt.%), curcuma powder (0,5 wt.%), malt flour (0.2 wt.%), burned sugar (0.1 wt.%), each weight percentage being based on the dry matter of the dough. No coating was applied.
Crumb III: Crumb I provided with a coating layer of double hardened sunflower oil, at least 50 % of the total surface of which crumb particles is provided with a coating layer.
Crumb IV: Crumb II provided with a coating layer of double hardened sunflower oil, at least 50 % of the total surface of which crumb particles is provided with a coating layer.
Crumb V: Crumb I provided with a coating layer of palm oil, at least 50 % of the total surface of which crumb particles is provided with a coating layer.
Crumb VI: Crumb II provided with a coating of palm oil, at least 50 % of the total surface of which crumb particles is provided with a coating layer.
Crumb VII: Crumb I provided with a coating layer of double hardened sunflower oil, which covers at least 90 % of the total surface of the crumb particles.
Crumb VIII: Crumb II provided with a coating layer of double hardened sunflower oil, which covers at least 90 % of the total surface of the crumb particles.
Crumb IX: Crumb I provided with a coating layer of palm oil, at least 90 % of the total surface of which crumb particles is provided with a coating layer.
Crumb X: Crumb II provided with a coating layer of palm oil, at least 90 % of the total surface of which crumb particles is provided with a coating layer.

The various experiments are shown in the table below.

**Table 3:**

| Example | Crumb coating | #Batter + crumb | Example | Crumb coating | #Batter + crumb |
|---|---|---|---|---|---|
| 8 | I | 4 | 18 | I | 5 |
| 9 | II | 4 | 19 | II | 5 |
| 10 | III | 4 | 20 | III | 5 |
| 11 | IV | 4 | 21 | IV | 5 |
| 12 | V | 4 | 22 | V | 5 |
| 13 | VI | 4 | 23 | VI | 5 |
| 14 | VII | 4 | 24 | VII | 5 |
| 15 | VIII | 4 | 25 | VIII | 5 |
| 16 | IX | 4 | 26 | IX | 5 |
| 17 | X | 4 | 27 | X | 5 |

**Table 4:**

| Ex. | Cohesion crumb coating | Firmness crumb coating | Crispiness crumb coating | Ex. | Cohesion crumb coating | Firmness crumb coating | Crispiness crumb coating |
|---|---|---|---|---|---|---|---|
| 8 | - | - | - | 18 | - | o | - |
| 9 | - | - | - | 19 | - | o | - |
| 10 | - | - | o | 20 | - | + | - |
| 11 | - | - | o | 21 | - | + | - |
| 12 | - | - | o | 22 | - | + | - |
| 13 | - | - | o | 23 | - | + | - |
| 14 | + | - | + | 24 | + | o | + |
| 15 | + | - | + | 25 | + | o | + |
| 16 | + | - | + | 26 | + | + | + |
| 17 | + | - | + | 27 | + | + | + |

The cohesion of the crumb coating was evaluated for the following criteria: - crumbly /little cohesion; o sandy; + brittle / crispy
The firmness of the crumb coating was evaluated for the following criteria: - croquette bursts open and filling comes out; o croquette remains closed but exhibits some cracks and weak spots; + firmness good.
The crispiness of the crumb coating was evaluated for the following criteria: - poor (does not feel crispy); o moderate (feels moderately crispy); + good (feels crispy).
From this it can be derived that in particular experiments 14-17 give the best results as regards cohesion and crispiness and experiments 24-27 give the best results on all parts. This concerns crumbs VII, VIII, IX and X with four and five crumb coatings, respectively. These are the crumbs that are provided with a coating layer that covers at least 90% of the surface. Palm oil (experiments 16/17/26/27) gives the best results.

### Examples 28-36

Taste tests were carried out using a human test panel consisting of 8-12 selected and trained persons. These persons tested the food products at four levels: viz 1) appearance, 2) feel, 3) taste, 4) overall evaluation.
For appearance, each product was evaluated for the overall appearance on a scale from 1 (not attractive) to 10 (attractive). For appearance, each product was moreover evaluated for crumb coating on a scale from 1 (insufficient) to 10 (sufficient). For appearance, each product was moreover evaluated for colour intensity on a scale from 1 (too light) to 5 (good) to 10 (too dark). For appearance, each product was moreover evaluated for crumb particle size on a scale from 1 (too fine) to 5 (good) to 10 (also coarse).

For feel, each product was evaluated for adhesion of the crumb coating to the filling / substrate on a scale from 1 (insufficient) to 10 (sufficient). For feel, each product was moreover evaluated for firmness on a scale from 1 (not firm) to 10 (firm). For feel, each product was moreover evaluated for layer thickness of the crumb coating on a scale from 1 (too thin) to 5 (good) to 10 (too thick). For feel, each product was moreover evaluated for greasiness on a scale from 1 (too dry) to 5 (good) to 10 (too greasy).

For taste, each product was evaluated for confirmation of the overall taste on a scale from 1 (insufficient) to 10 (sufficient). For taste, each product was moreover evaluated for crispiness on a scale from 1 (hard) to 10 (crispy). For taste, each product was moreover evaluated for greasiness on a scale from 1 (too dry) to 5 (good) to 10 (too greasy).

The overall evaluation was carried out on a scale from 1 (poor) to 10 (good). In addition to that, the panel was asked whether they had any additional remarks, for example in connection with the smell, the residual flavour or aftertaste effects.

The filling that was used was a ragout, or a chicken filling or cheese-filled puff pastry or fried rice (nasi) or bakmi or various vegetable-based fillings and mushrooms in puff pastry, or various potato variants. Eight different products were tested with different fillings, viz a croquette (Examples 28-37), a cheese soufflé (Examples 38-39), puff pastry with mushrooms and cheese (Examples 40-41), chicken fillet (Examples 42-43) - which is pre-cooked, chicken pieces (Examples 44-45), bakmi snack (bamischijf) (Examples 46-47), fried rice snack (nasischijf) (Examples 48-49). First, a powder coating was applied as described in Examples 8-27, then a type E batter coating and subsequently various types of crumb coating as described in the foregoing. The latter two steps of batter coating and crumb coating were repeated 2-5 times in total.

**Table 5:**

| Example | Crumb coating | # Batter+ crumb | Example | Crumb coating | # Batter+ crumb |
|---|---|---|---|---|---|
| 28 | I | 5 | 39 | X | 2 |
| 29 | II | 5 | 40 | IX | 2 |
| 30 | III | 5 | 41 | X | 2 |
| 31 | IV | 5 | 42 | IX | 2 |
| 32 | V | 5 | 43 | X | 2 |
| 33 | VI | 5 | 44 | IX | 2 |
| 34 | VII | 5 | 45 | X | 2 |
| 35 | VIII | 5 | 46 | IX | 4 |
| 36 | IX | 5 | 47 | X | 4 |
| 37 | X | 5 | 48 | IX | 4 |
| 38 | IX | 2 | 49 | X | 4 |

In the table below, the average value of the evaluation by the tasters is shown.

**Table 6:**

| Ex. | Appearance | Feel | Taste | Overall evaluation | Ex. | Appearance | Feel | Taste | Overall evaluation |
|---|---|---|---|---|---|---|---|---|---|
| 28 | 5 | 6 | 4 | 5 | 39 | 5 | 8 | 8 | 7 |
| 29 | 5 | 6 | 4 | 5 | 40 | 8 | 8 | 9 | 8 |
| 30 | 6 | 6 | 5 | 6 | 41 | 4 | 8 | 8 | 7 |
| 31 | 6 | 6 | 5 | 6 | 42 | 7 | 8 | 8 | 8 |
| 32 | 6 | 6 | 7 | 6 | 43 | 7 | 8 | 8 | 8 |
| 33 | 6 | 6 | 7 | 6 | 44 | 8 | 7 | 7 | 7 |
| 34 | 8 | 7 | 3 | 6 | 45 | 7 | 7 | 7 | 7 |
| 35 | 8 | 7 | 3 | 6 | 46 | 6 | 6 | 8 | 7 |
| 36 | 8 | 8 | 8 | 8 | 47 | 8 | 6 | 8 | 7 |
| 37 | 8 | 8 | 8 | 8 | 48 | 6 | 6 | 8 | 7 |
| 38 | 8 | 8 | 8 | 8 | 49 | 7 | 6 | 8 | 7 |

From the above experiments it appears that the members of the test panel found the snacks of examples 36, 37, 38, 40, and 42 and 43 to be the best. These snacks all comprise a crumb of which at least 90 % of the surface is covered with palm oil.

From the above experiments it appears that consumers consider a double hardened oil (as used in experiments 30, 31, 34, and 35) to be less tasty.

The present invention will be more precisely explained on the basis of the following claims.

## Claims

1. A coated crumb particle comprising a crumb particle which is at least partially covered with a coating layer, wherein the coating layer comprises a fat composition, wherein the coating layer covers at least 80%, preferably at least 90% of the surface of the crumb particle.

2. A coated crumb particle according to claim 1, wherein the coating layer consists of at least 95 wt.% fat, preferably of at least 95 wt.%, solid fat.

3. A coated crumb particle according to one or more of the preceding claims, wherein the coating layer covers at least 95%, in particular at least 99%, of the surface of the crumb particle.

4. A coated crumb particle according to one or more of the preceding claims, wherein the fat is a solid fat that preferably has a melting point of at least 20 °C, preferably between 25 °C and 100 °C, preferably between 35 °C and 80 °C, in particular between 25 °C and 65 °C, wherein preferably palm oil is used as the fat.

5. A coated crumb particle according to one or more of the preceding claims, wherein the coating layer has a thickness of between 0.1 and 0.3 mm.

6. A coated crumb particle according to one or more of the preceding claims, wherein the crumb particles comprise fat in an amount of 12% to 25%, based on the total weight of the crumb particle.

7. A coated crumb particle according to one or more of the preceding claims, wherein the crumb particle is a breadcrumb particle.

8. A food product comprising, from the centre outward:
a filling or a substrate;
a batter coating, preferably formed from a batter comprising water, protein, a polysaccharide and salt;
a crumb coating consisting of a layer of coated crumb particles according to one or more of claims 1 to 7.

9. A food product according to claim 8, wherein the crumb coating constitutes between 20% and 35% of the total weight of the food product.

10. A food product according to either one or both of claims 8-9, wherein the crumb coating comprises breadcrumb.

11. A food product according to one or more of claims 8-10, wherein the batter coating comprises water, chicken egg protein, guar gum and xanthan gum, salt and whey protein.

12. A method for preparing a coated crumb particle according to one or more of claims 1-7, the method comprising i) providing a plurality of crumb particles, ii) fluidising the particles in an air flow, iii) spraying a liquid fat composition, preferably having a temperature of at least 65 °C, onto the fluidised particles so as to provide at least part of the outer surface of the particles with a coating layer.

13. A method for preparing a coated crumb particle according to one or more of claims 1-7, the method comprising I) mixing a starch-containing material, a raising agent, a flavouring, a colourant and water so as to prepare a dough; II) baking the dough; III) reducing the baked dough so as to form crumb particles; IV) optionally drying the crumb particles; ii) fluidising the particles in an air flow, iii) spraying a liquid fat composition, preferably having a temperature of at least 65 °C, onto the fluidised particles so as to provide at least part of the outer surface of the particles with a coating layer.

14. A method for preparing a food product, comprising the steps of
a) providing a filling / a substrate;
b) possibly applying a batter coating and a powder coating ("dust") or providing a powder coating on the filling/the substrate;
c) applying a batter coating;
d) applying, to the batter coating from step c), a crumb coating consisting of a layer of coated crumb particles according to one or more of claims 1-7;
e) possibly pre-cooking the crumb-coated product so as to prepare a food product.

15. Use of the coated crumb particles according to one or more of claims 1-7 for applying a crumb coating to a filling / substrate for the purpose of producing a food product that can be prepared without deep-frying.

## Patentansprüche

1. Beschichteter Krümelpartikel, der einen Krümelpartikel umfasst, der wenigstens teilweise mit einer Überzugsschicht bedeckt ist, wobei die Überzugsschicht eine Fettzusammensetzung umfasst, wobei die Überzugsschicht wenigstens 80 %, bevorzugt wenigstens 90 % der Oberfläche des Krümelpartikels bedeckt.

2. Beschichteter Krümelpartikel nach Anspruch 1, wobei die Überzugsschicht aus wenigstens 95 Gew.-% Fett, bevorzugt wenigstens 95 Gew.-% Festfett besteht.

3. Beschichteter Krümelpartikel nach einem oder mehreren der vorherigen Ansprüche, wobei die Überzugsschicht wenigstens 95 %, insbesondere wenigstens 99 % der Oberfläche des Krümelpartikels bedeckt.

4. Beschichteter Krümelpartikel nach einem oder mehreren der vorherigen Ansprüche, wobei das Fett ein Festfett ist, das bevorzugt einen Schmelzpunkt von wenigstens 20 °C, bevorzugt zwischen 25 °C und 100 °C, bevorzugt zwischen 35 °C und 80 °C, insbesondere zwischen 25 °C und 65 °C hat, wobei bevorzugt Palmöl als Fett benutzt wird.

5. Beschichteter Krümelpartikel nach einem oder mehreren der vorherigen Ansprüche, wobei die Überzugsschicht eine Dicke zwischen 0,1 und 0,3 mm hat.

6. Beschichteter Krümelpartikel nach einem oder mehreren der vorherigen Ansprüche, wobei die Krümelpartikel Fett in einer Menge von 12 % bis 25 % auf der Basis des Gesamtgewichts des Krümelpartikels umfassen.

7. Beschichteter Krümelpartikel nach einem oder mehreren der vorherigen Ansprüche, wobei der Krümelpartikel ein Brotkrümelpartikel ist.

8. Nahrungsmittelprodukt, das von der Mitte nach außen Folgendes umfasst:
eine Füllung oder ein Substrat;
einen Teigüberzug, bevorzugt gebildet aus einem Teig, der Wasser, Protein, ein Polysaccharid und Salz umfasst;
einen Krümelüberzug, bestehend aus einer Schicht aus beschichteten Krümelpartikeln nach einem der Ansprüche 1 bis 7.

9. Nahrungsmittelprodukt nach Anspruch 8, wobei der Krümelüberzug 20 % bis 35 % des Gesamtgewichts des Nahrungsprodukts ausmacht.

10. Nahrungsmittelprodukt nach einem oder beiden der Ansprüche 8-9, wobei der Krümelüberzug Brotkrümel umfasst.

11. Nahrungsmittelprodukt nach einem oder mehreren der Ansprüche 8-10, wobei der Teigüberzug Wasser, Hühnereiweiß, Guargummi und Xanthangummi, Salz und Molkeeiweiß umfasst.

12. Verfahren zur Herstellung eines beschichteten Krümelpartikels nach einem oder mehreren der Ansprüche 1-7, wobei das Verfahren Folgendes umfasst: i) Bereitstellen einer Vielzahl von Krümelpartikeln, ii) Fluidisieren der Partikel in einem Luftstrom, iii) Sprühen einer flüssigen Fettzusammensetzung mit einer Temperatur von bevorzugt wenigstens 65 °C auf die fluidisierten Partikel, um wenigstens einen Teil der Außenfläche der Partikel mit einer Überzugsschicht zu versehen.

13. Verfahren zur Herstellung eines beschichteten Krümelpartikels nach einem oder mehreren der Ansprüche 1-7, wobei das Verfahren Folgendes umfasst: I) Mischen eines stärkehaltigen Materials, eines Treibmittels, eines Aromastoffs, eines Farbstoffs und Wasser, um einen Teig herzustellen; II) Backen des Teigs; III) Reduzieren des gebackenen Teigs, um Krümelpartikel zu bilden; IV) optional Trocknen der Krümelpartikel; ii) Fluidisieren der Partikel in einem Luftstrom, iii) Sprühen einer flüssigen Fettzusammensetzung mit einer Temperatur von bevorzugt wenigstens 65 °C auf die fluidisierten Partikel, um wenigstens einen Teil der Außenfläche der Partikel mit einer Überzugsschicht zu versehen.

14. Verfahren zur Herstellung eines Nahrungsprodukts, das die folgenden Schritte umfasst:
a) Bereitstellen einer Füllung/eines Substrats;
b) möglicherweise Aufbringen eines Teigüberzugs und eines Pulverüberzugs ("Staub") oder Bereitstellen eines Pulverüberzugs auf der Füllung/dem Substrat;
c) Aufbringen eines Teigüberzugs;
d) Aufbringen eines Krümelüberzugs bestehend aus einer Schicht von beschichteten Krümelpartikeln nach einem oder mehreren der Ansprüche 1-7 auf den Teigüberzug aus Schritt c);
e) möglicherweise Vorkochen des mit Krümeln beschichteten Produkts, um ein Nahrungsmittelprodukt herzustellen.

15. Verwendung der beschichteten Krümelpartikel nach einem oder mehreren der Ansprüche 1-7 zum Aufbringen eines Krümelüberzugs auf eine Füllung/ein Substrat zwecks Herstellung eines Nahrungsmittelprodukts, das ohne Frittieren hergestellt werden kann.

## Revendications

1. Particule de miette enrobée comprenant une particule de miette qui est au moins partiellement couverte d'une couche d'enrobage, où la couche d'enrobage comprend une composition de matière grasse, où la couche d'enrobage couvre au moins 80%, de préférence au moins 90% de la surface la particule de miette.

2. Particule de miette enrobée selon la revendication 1, dans laquelle la couche d'enrobage est constituée d'au moins 95% en poids de matière grasse, de préférence d'au moins 95% en poids de matière grasse solide.

3. Particule de miette enrobée selon une ou plusieurs des revendications précédentes, dans laquelle la couche d'enrobage couvre au moins 95%, en particulier au moins 99% de la surface de la particule de miette.

4. Particule de miette enrobée selon une ou plusieurs des revendications précédentes, dans laquelle la matière grasse est une matière grasse solide qui a de préférence un point de fusion d'au moins 20°C, de préférence allant de 25°C à 100°C, de préférence allant de 35°C à 80°C, en particulier allant de 25°C à 65°C, où, de préférence, l'huile de palme est utilisée comme matière grasse.

5. Particule de miette enrobée selon une ou plusieurs des revendications précédentes, dans laquelle la couche d'enrobage a une épaisseur comprise entre 0,1 et 0,3 mm.

6. Particule de miette enrobée selon une ou plusieurs des revendications précédentes, dans laquelle les particules de miettes comprennent de la matière grasse en une quantité allant de 12% à 25%, par rapport au poids total de la particule de miette.

7. Particule de miette enrobée selon une ou plusieurs des revendications précédentes, dans laquelle la particule de miette est une particule de chapelure.

8. Produit alimentaire comprenant, du centre vers l'extérieur :
une fourrure ou un substrat ;
un enrobage de pâte à frire, de préférence formé d'une pâte à frire comprenant de l'eau, une protéine, un polysaccharide et du sel ;
un enrobage de miettes constitué d'une couche de particules de miettes enrobées selon une ou plusieurs des revendications 1 à 7.

9. Produit alimentaire selon la revendication 8, dans lequel l'enrobage de miettes constitue entre 20% et 35% du poids total du produit alimentaire.

10. Produit alimentaire selon l'une et/ou l'autre des revendications 8 et 9, dans lequel l'enrobage de miettes comprend de la chapelure.

11. Produit alimentaire selon une ou plusieurs des revendications 8 à 10, dans lequel l'enrobage de pâte à frire comprend de l'eau, une protéine d'oeuf de poule, la gomme de guar et la gomme de xanthane, du sel et une protéine de lactosérum.

12. Procédé de préparation d'une particule de miette enrobée selon une ou plusieurs des revendications 1 à 7, le procédé comprenant le fait i) de fournir une pluralité de particules de miettes, ii) de fluidiser les particules dans un flux d'air, iii) de pulvériser une composition de matière grasse liquide, ayant de préférence une température d'au moins 65°C, sur les particules fluidisées de manière à fournir une couche d'enrobage à au moins une partie de la surface externe des particules.

13. Procédé de préparation d'une particule de miette enrobée selon une ou plusieurs des revendications 1 à 7, le procédé comprenant le fait I) de mélanger une matière contenant de l'amidon, un agent de levage, un arôme, un colorant et de l'eau afin de préparer une pâte ; II) de cuire la pâte ; III) de réduire la pâte cuite de manière à former des particules de miettes ; IV) de sécher éventuellement les particules de miettes ; ii) de fluidiser les particules dans un flux d'air, iii) de pulvériser une composition de matière grasse liquide, ayant de préférence une température d'au moins 65°C, sur les particules fluidisées de manière à fournir une couche d'enrobage à au moins une partie de la surface externe des particules.

14. Procédé de préparation d'un produit alimentaire, comprenant les étapes qui consistent
a) à fournir un fourrage/un substrat ;
b) à appliquer éventuellement un enrobage de pâte à frire et un enrobage de poudre (« poussière ») ou à fournir un enrobage de poudre sur le fourrage/le substrat ;
c) à appliquer un enrobage de pâte à frire ;
d) à appliquer, à l'enrobage de pâte à frire provenant de l'étape c), un enrobage de miettes constitué d'une couche de particules de miettes enrobées selon une ou plusieurs des revendications 1 à 7 ;
e) à pré-cuire éventuellement le produit enrobé de miettes afin de préparer un produit alimentaire.

15. Utilisation des particules de miettes enrobées selon une ou plusieurs des revendications 1 à 7, pour appliquer un enrobage de miettes à une fourrure/un substrat dans le but de produire un produit alimentaire qui peut être préparé sans friture.
